Europäisches Patentamt

European Patent Office

Office européen des brevets

(19)

(11) Numéro de publication : **0 465 384 B1**

# (12) FASCICULE DE BREVET EUROPEEN

(45) Date de publication du fascicule du brevet :
**25.10.95 Bulletin 95/43**

(51) Int. Cl.⁶ : **H02H 3/093**

(21) Numéro de dépôt : **91420209.8**

(22) Date de dépôt : **25.06.91**

(54) **Déclencheur électronique comportant une fonction long retard améliorée.**

(30) Priorité : **03.07.90 FR 9008527**

(43) Date de publication de la demande :
**08.01.92 Bulletin 92/02**

(45) Mention de la délivrance du brevet :
**25.10.95 Bulletin 95/43**

(84) Etats contractants désignés :
**BE CH DE ES GB IT LI SE**

(56) Documents cités :
**FR-A- 2 540 303**
**US-A- 4 445 183**

(73) Titulaire : **SCHNEIDER ELECTRIC SA**
**40, avenue André Morizet**
**F-92100 Boulogne-Billancourt (FR)**

(72) Inventeur : **Tripodi, Paul**
**Merlin Gerin,**
**Sce. Brevets**
**F-38050 Grenoble Cedex (FR)**

(74) Mandataire : **Jouvray, Marie-Andrée et al**
**Schneider Electric SA,**
**Sce. Propriété Industrielle**
**F-38050 Grenoble Cédex 09 (FR)**

EP 0 465 384 B1

## Description

L'invention concerne un déclencheur électronique comportant des moyens de détection du courant parcourant un conducteur destiné à être protégé par un disjoncteur électrique associé au déclencheur, un ensemble électronique de traitement assurant au moins une fonction de déclenchement temporisé de type long retard, l'ensemble, connecté aux moyens de détection, comportant des moyens de production d'une valeur représentative du courant, des moyens de production d'une première grandeur, représentative de l'état thermique du disjoncteur, et dont les variations sont proportionnelles à la différence entre le carré de la valeur représentative du courant et le carré d'un seuil de courant prédéterminé, et des moyens de comparaison de la première grandeur à un premier seuil prédéterminé.

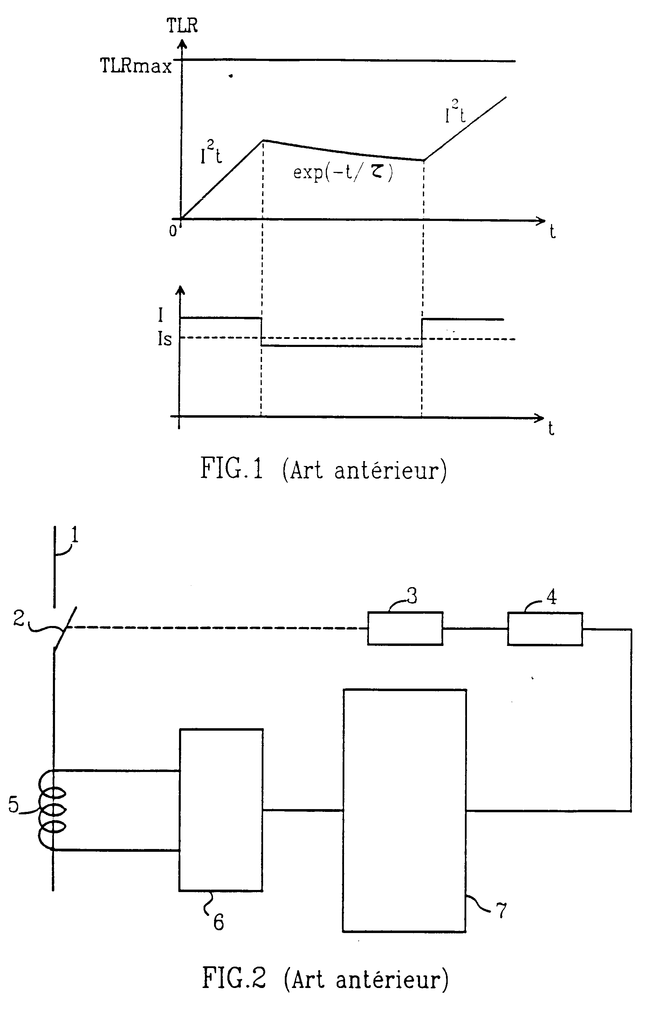

Dans la plupart des déclencheurs électroniques connus, la temporisation de la fonction long retard est inversement proportionnelle au carré du courant de défaut. Ces déclencheurs tiennent également compte d'une éventuelle diminution du courant, au-dessous du seuil de courant, pendant la durée de la temporisation. De manière classique (figure 1), lorsque la valeur I représentative du courant est supérieure au seuil de courant Is, la grandeur TLR représentative de l'état thermique du disjoncteur, initialement fixée à une valeur minimum, O sur la figure, croît proportionnellement au carré du courant, simulant un échauffement, tandis que, lorsque la valeur I représentative du courant est inférieure au seuil de courant Is, la grandeur TLR décroît exponentiellement avec le temps, simulant un refroidissement. Un signal de déclenchement est produit lorsque la grandeur TLR dépasse une valeur maximum prédéterminée TLR max.

On constate que, dans certains cas, un signal de déclenchement est produit, bien que la valeur moyenne de la valeur représentative du courant, pendant la durée de la temporisation, reste inférieure au seuil de déclenchement. Ceci a, pour l'utilisateur, les mêmes conséquences qu'une diminution du seuil de déclenchement.

L'invention a pour but de remédier à ce type d'inconvénient et de fournir au déclencheur une fonction long retard améliorée.

En analysant les variations de TLR en fonction du temps sur la figure 1, on peut noter qu'il n'y a aucune homogénéité entre les simulations de l'échauffement et du refroidissement. A titre d'exemple, des valeurs classiques du seuil de courant Is, de la courbe d'échauffement et de la constante de temps de refroidissement sont données par:

Is = 1,05 à 1,20 Ir, Ir étant le courant de réglage du déclencheur.

La courbe $I^2t$ = constante est telle que t = 15 à 480s, par exemple, 110s pour I = 1,5 Ir.

La constante de temps de refroidissement est de l'ordre de 30mn.

Ceci conduit à une dissymétrie des fonctions d'échauffement et de refroidissement et à une forte prise en compte de petits dépassements du seuil de courant Is par la valeur I représentative du courant.

Dans le brevet US-4.445.183, qui divulgue un déclencheur conforme au préambule de la revendication 1, les variations de la première grandeur sont proportionnelles à la différence entre le carré de la valeur représentative du courant et le carré du seuil de courant.

Le fait de considérer le seuil de courant comme un point d'équilibre, à partir duquel le courant varie, revient à effectuer une moyenne des variations du courant autour de ce seuil, et à tenir compte des variations du courant inférieures au seuil de la même façon que des variations du courant supérieures au seuil. Grâce à cette symétrie, une valeur représentative du courant dont la valeur moyenne, pendant la temporisation, est inférieure au seuil, ne peut pas conduire à un déclenchement, même si cette valeur prend provisoirement des valeurs supérieures au seuil.

Si, comme dans le brevet US-4.445.183, l'ensemble produit un signal de déclenchement lorsque la première grandeur est supérieure audit premier seuil, la courbe de déclenchement obtenue se rapproche de celle d'un fusible ou d'un bilame.

Selon l'invention, l'ensemble comporte des moyens d'incrémentation d'une seconde grandeur représentative de l'état thermique du disjoncteur lorsque la première grandeur est supérieure au premier seuil, des moyens de décrémentation de la seconde grandeur lorsque la première grandeur est inférieure au premier seuil, et des moyens de comparaison de la seconde grandeur à un second seuil, prédéterminé, produisant un signal de déclenchement lorsque la seconde grandeur est supérieure au second seuil.

Dans ce cas, le principe de l'homogénéité n'est utilisé que pour les petites variations de la grandeur représentative du courant. La courbe de déclenchement est alors essentiellement déterminée par le type de variations de la seconde grandeur. On obtient une courbe proche des courbes en $I^2t$ classiques si l'incrémentation de la seconde grandeur est proportionnelle au carré de la valeur représentative du courant et sa décrémentation une fonction exponentielle du temps.

La première grandeur est, de préférence, limitée à des niveaux haut et bas prédéterminés. Ceci permet de déterminer l'inertie de la fonction long retard aux petites variations, et la forme précise de la courbe de déclenchement.

En pratique, la détermination de la valeur des première et/ou seconde grandeurs représentatives de l'état thermique du disjoncteur ne s'effectue pas en continu, mais à chaque acquisition d'une valeur représentative du courant.

Dans les déclencheurs à microprocesseur, cette acquisition est généralement réalisée par échantillonnage du signal de sortie des moyens de détection du courant. Dans certains déclencheurs, ledit signal est appliqué à un circuit de redressement et de détection crête avant d'être échantillonné. Chaque échantillon, par exemple chaque échantillon représentatif de la valeur crête du courant, peut être utilisé, selon l'invention, pour déterminer la variation correspondante des première et/ou seconde grandeurs représentatives de l'état thermique du disjoncteur. On s'affranchit ainsi des petites variations d'amplitude du signal, et il n'y a pas de déclenchement tant que la valeur moyenne, pendant la durée de la temporisation, de la valeur échantillonnée du courant, par exemple de sa valeur crête, reste inférieure au seuil de déclenchement.

Selon un mode de réalisation préférentiel, la valeur représentative du courant est représentative de la valeur efficace du courant, et obtenue par échantillonnage du signal de sortie des moyens de détection, élévation au carré des échantillons et intégration sur une période d'intégration prédéterminée. Une telle valeur dépend très fortement des variations de la fréquence du réseau alimentant le conducteur à protéger, et peut conduire à des déclenchements intempestifs dans les déclencheurs électroniques de type classique. L'invention, mise en oeuvre dans un déclencheur sensible à la valeur efficace du courant, permet de s'affranchir largement de ces variations de fréquence.

Pour améliorer encore l'indépendance de la fonction long retard vis à vis de la fréquence du réseau, notamment pour les fréquences élevées, le signal de sortie des moyens de détection est échantillonné par groupes successifs de "n" échantillons avec une période d'échantillonnage prédéterminée, les échantillons adjacents de deux groupes successifs étant séparés par une période légèrement supérieure à la période d'échantillonnage. Dans un mode de réalisation préférentiel, la période séparant des échantillons adjacents de deux groupes successifs est égale à la période d'échantillonnage augmentée du quart de la période d'échantillonnage.

Afin de s'affranchir des harmoniques, selon un développement de l'invention le signal de sortie des moyens de détection est échantillonné par groupes successifs de n échantillons avec des périodes d'échantillonnage (Te1-Te4) prédéterminées, différentes pour deux groupes successifs.

Les échantillons constituent alors, de préférence, des cycles de q groupes successifs, avec une succession identique des périodes d'échantillonnage (Te1-Te4) à l'intérieur d'un cycle.

D'autres avantages et caractéristiques ressortiront plus clairement de la description qui va suivre de modes particuliers de réalisation de l'invention, donnés à titre d'exemples non limitatifs, et représentés aux dessins annexés sur lesquels:

La figure 1 illustre les variations, en fonction du temps, de la valeur représentative du courant et d'une grandeur représentative de l'état thermique du disjoncteur dans un déclencheur électronique classique.

La figure 2 représente un schéma bloc simplifié d'un déclencheur de type connu dans lequel l'invention peut être mise en oeuvre.

La figure 3 illustre les courbes de déclenchement long retard d'un déclencheur classique (courbe a) et d'une variante utilisant le seuil de courant comme point d'équilibre (courbes b).

Les figures 4 à 6 représentent les variations en fonction du temps d'une grandeur représentative de l'état thermique du disjoncteur et de la valeur représentative du courant, respectivement pour une fonction long retard classique (figure 4), et pour une fonction long retard selon les courbes b de la figure 3 (figures 5 et 6).

La figure 7 illustre les variations en fonction du temps de deux grandeurs représentatives de l'état thermique du disjoncteur et de la valeur représentative du courant pour une fonction long retard selon l'invention.

La figure 8 illustre les courbes de déclenchement long retard d'un déclencheur selon l'invention.

La figure 9 représente l'organigramme de la fonction long retard selon l'invention.

La figure 10 illustre l'écart entre le carré de la valeur efficace calculé et le carré de la valeur efficace réel d'un signal sinusoïdal de fréquence 50Hz (courbe e), 49Hz (courbe f) et 51Hz (courbe g).

La figure 11 représente, en fonction de la fréquence, l'écart maximum entre le carré de la valeur efficace calculé et le carré de la valeur efficace réel d'un signal sinusoïdal.

La figure 12 représente un organigramme du même type que celui selon la figure 9, appliqué à un déclencheur multipolaire.

Sur la figure 2, un conducteur 1 d'un réseau électrique est protégé par un disjoncteur 2. Le mécanisme 3 du disjoncteur 2 est piloté par un relais polarisé 4 de commande de déclenchement du disjoncteur en cas de surcharge ou de court-circuit. Un transformateur de courant 5, associé au conducteur 1, délivre un signal analogique représentatif du courant parcourant le conducteur. Ce signal est appliqué, par l'intermédiaire d'un circuit de mise en forme 6, à un ensemble électronique de traitement 7 dont la sortie contrôle le relais polarisé 4. Le déclencheur assure au moins une fonction long retard, bien connue des spécialistes, lorsqu'un défaut apparait dans le conducteur.

Is étant le seuil de courant devant conduire à un déclenchement en cas de dépassement, les variations d'une grandeur TLR1, représentative de l'état thermique du disjoncteur, sont proportionnelles à la différence, $I^2 - Is^2$, entre le carré de la valeur représentative du courant et le carré du seuil de courant.

A chaque acquisition, par l'ensemble électronique de traitement 7, d'une valeur I représentative du courant, celui-ci détermine une nouvelle valeur de la grandeur TLR1, telle que:

$$TLR1_n = TLR1_{(n-1)} + (I^2 - I_s^2), \quad (1)$$

la grandeur TLR1 étant initialement mise à un niveau bas, de préférence à zéro.

Un signal de déclenchement peut être produit en sortie de l'ensemble 7 lorsque la grandeur TLR1 est supérieure à une valeur prédéterminée TLR1max.

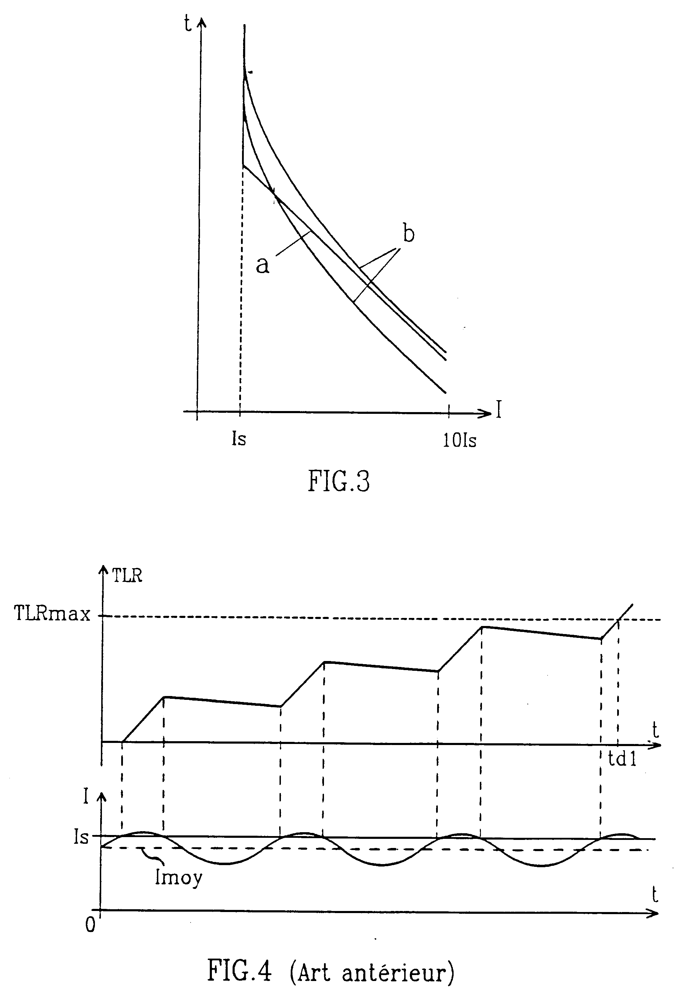

La courbe a de la figure 3 représente, en coordonnées logarithmiques, la courbe de déclenchement long retard d'un déclencheur classique, les courbes b illustrant des courbes de déclenchement, en $(I^2 - I_s^2)$ t = constante, obtenues en faisant varier la grandeur TLR1 selon l'équation (1), pour deux valeurs différentes de la valeur TLR1max. Contrairement à la courbe a, les courbes b sont arrondies au niveau du courant de seuil Is, ce qui est avantageux.

La figure 4 illustre les variations, en fonction du temps, de TLR pour une fonction long retard classique, du même type que sur la figure 1, lorsque la valeur I représentative du courant oscille périodiquement autour d'une valeur moyenne Imoy inférieure au seuil de courant Is. La dissymétrie des fonctions d'échauffement et de refroidissement implique une forte prise en compte des dépassements du seuil Is par la valeur I, conduisant à un déclenchement à un instant de déclenchement td1, lorsque TLR atteint TLRmax, bien que la valeur moyenne de I reste constamment inférieure au seuil de courant Is.

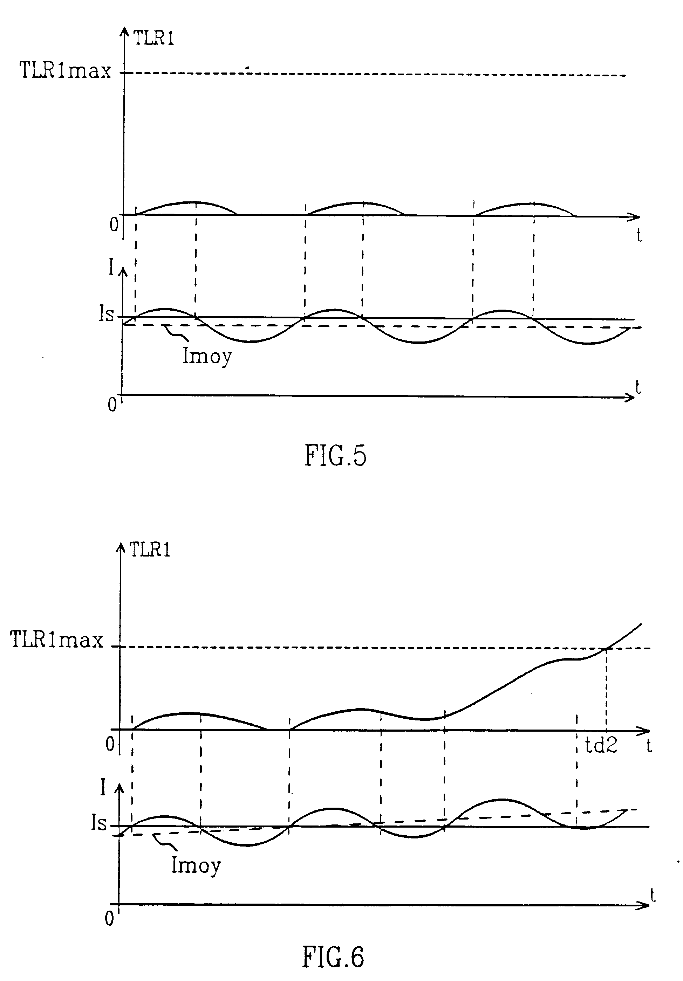

Par contre, la même oscillation périodique de I autour d'une valeur moyenne Imoy inférieure au seuil de courant Is, ne conduit pas à un déclenchement si les variations de TLR1 sont proportionnelles à la différence entre le carré de I et le carré de Is. En effet, comme représenté à la figure 5, la grandeur TLR1, qui ne peut être inférieure à une valeur basse prédéterminée, zéro sur la figure, prenant en compte de la même manière les valeurs supérieures et inférieures à Is, revient à zéro avant la fin de chaque période de variation de I et ne peut atteindre la valeur TLR1max qui conduirait à un déclenchement. Cette loi de variation de TLR1 conduit néanmoins à un déclenchement (td2) si la valeur moyenne Imoy du courant dépasse le seuil de déclenchement Is pendant un temps suffisamment long (figure 6).

Selon l'invention, la grandeur TLR1 est combinée à une autre grandeur TLR2 représentative de l'état thermique du disjoncteur. Cette grandeur TLR2 a, comme la grandeur TLR des fonctions long retard classiques, une variation positive, de préférence proportionnelle à $I^2$, pour simuler un échauffement, et une variation négative, de préférence exponentielle, pour simuler un refroidissement. Cependant, contrairement à la grandeur TLR classique (figures 1 et 4), le passage entre les fonctions d'échauffement et de refroidissement de la grandeur TLR2 n'est pas directement lié à la comparaison de la valeur I au seuil de courant (Is), mais à la comparaison de la grandeur TLR1 à un seuil intermédiaire d'échauffement STLR1.

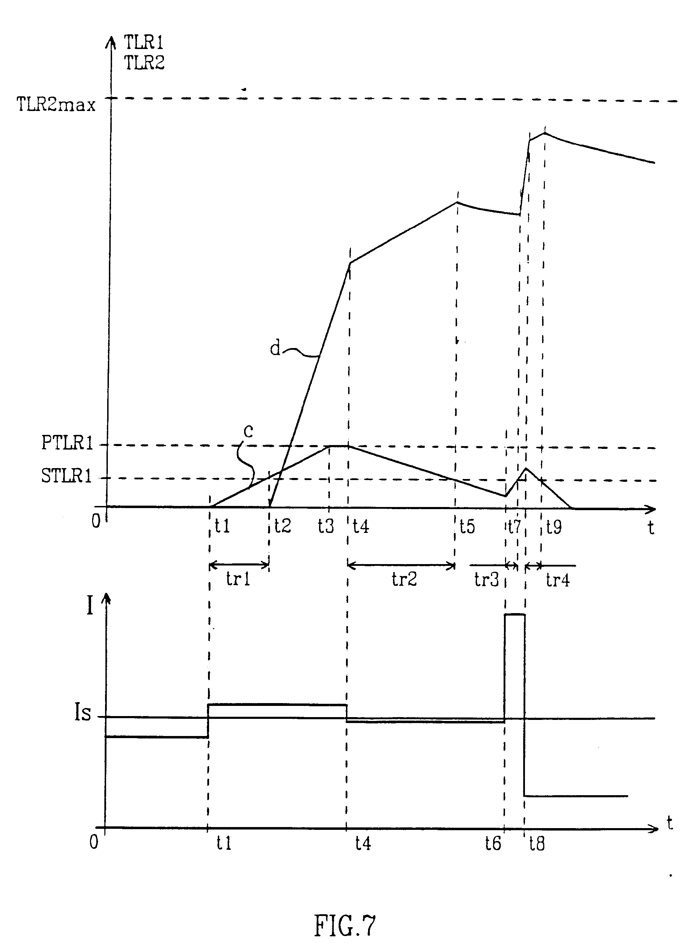

La figure 7 représente les variations, en fonction du temps de TLR1 (courbe c) et TLR2 (courbe d) pour diverses valeurs relatives de I et Is:

- Jusqu'à l'instant t1, I est inférieur à Is, les grandeurs TLR1 et TLR2, nulles à l'origine, restent à zéro.
- A l'instant t1, I passe au-dessus de Is, TLR1 croît alors proportionnellement à $I^2 - I_s^2$.
- Entre les instants t1 et t2, TLR1 restant inférieure à STLR1, TLR2 reste à zéro.
- A l'instant t2, TLR1, qui continue à croître, atteint le seuil STLR1, et conduit la grandeur TLR2 à simuler un échauffement. TLR2 croît en $I^2$t.
- Dans le mode de réalisation représenté, la grandeur TLR1 est plafonnée à un niveau haut PTLR1. Lorsqu'elle atteint cette valeur, à l'instant t3, elle reste égale à celle-ci tant que I est supérieure à Is.
- A l'instant t4, I redevient inférieure, légèrement à Is, et TLR1 décroît. La différence $I^2 - I_s^2$ étant, en valeur absolue, légèrement plus petite après l'instant t4, qu'entre les instants t1 et t3, la décroissance de TLR1 après l'instant t4 est moins rapide que sa croissance entre les instants t1 et t3. Jusqu'à l'instant t5, TLR1 reste supérieure à STLR1 et TLR2 continue à simuler un échauffement, donc à croître proportionnellement à $I^2$. La valeur de I entre t4 et t5 étant inférieure à sa valeur entre t1 et t4, la croissance de TLR2 est alors moins rapide que précédemment.
- Lorsque TLR1 devient inférieure à STLR1, à partir de t5, TLR2 simule un refroidissement et décroît exponentiellement.
- A l'instant t6, I devient très supérieure à Is. TLR1 croît alors rapidement et atteint le seuil STLR1 à l'instant t7. Entre t6 et t7, TLR2 continue de décroître exponentiellement.
- A partir de t7, TLR2 croît très rapidement jusqu'à l'instant t8 où I redevient inférieur à Is.
- A partir de t8, TLR1 décroît, proportionnellement à la différence $I^2 - I_s^2$, c'est à dire assez rapidement dans l'exemple représenté sur la figure, I étant alors très inférieur à Is. TLR1 reste supérieur à STLR1 jusqu'à l'instant t9. Entre t8 et t9, TLR2 continue à croître, mais moins rapidement qu'entre t7 et t8 car I est beaucoup plus faible.
- A partir de t9, TLR2 recommence à décroître exponentiellement.

Sur la figure 7, TLR2 restant inférieur à une valeur maximale TLR2max, aucun signal de déclenchement n'est émis.

La grandeur TLR2 ne simule un échauffement ou un refroidissement qu'avec un certain retard, par rapport à l'instant où la valeur I devient respectivement supérieure ou inférieure au seuil de courant Is. Sur la figure, la durée du retard à l'échauffement est représentée par tr1, entre les instants t1 et t2, et tr3 entre les instants t6 et t7, la durée du retard au refroidissement correspondant à tr2 entre les instants t4 et t5 et tr4 entre les instants t8 et t9. Cette inertie à l'échauffement et au refroidissement dépend du niveau de la valeur I représentative du courant par rapport au seuil de courant Is. La valeur I étant très supérieure au seuil entre t6 et t8, le retard tr3 à l'échauffement est beaucoup plus court que le retard tr1 à l'échauffement correspondant à un dépassement moins important du seuil Is par la valeur I à partir de l'instant t1.

Comme dans la variante décrite au regard des figures 5 et 6, une valeur représentative du courant dont la valeur moyenne est inférieure au seuil pendant la durée de la temporisation ne conduira pas à un déclenchement. L'inertie à l'échauffement de la grandeur TLR2 apportée par l'utilisation de la grandeur TLR1 empêche toute croissance de TLR2 tant que TLR1 n'a pas dépassé le seuil STLR1. Le choix du seuil STLR1 permet d'ajuster la forme de la courbe de déclenchement. Afin d'avoir une inertie symétrique à l'échauffement et au refroidissement, le seuil STLR1 sera choisi de préférence égal à PTLR1/2, comme représenté à la figure 7. Les figures 5 et 6 s'appliquent aux variations de TLR1 selon l'invention, si l'on remplace TLR1max par STLR1. Sur la figure 5, les variations de I autour de Imoy, inférieur à Is, sont insuffisantes pour que TLR1 dépasse STLR1 et TLR2 n'est pas activé. Sur la figure 6, Imoy devenant supérieur à Is, TLR1 croît de façon continue, et lorsque TLR1 atteint le seuil STLR1, TLR2 commence à simuler un échauffement. Si celui-ci se poursuit pendant un temps suffisant, TLR2 atteindra TLR2max et conduira à un déclenchement.

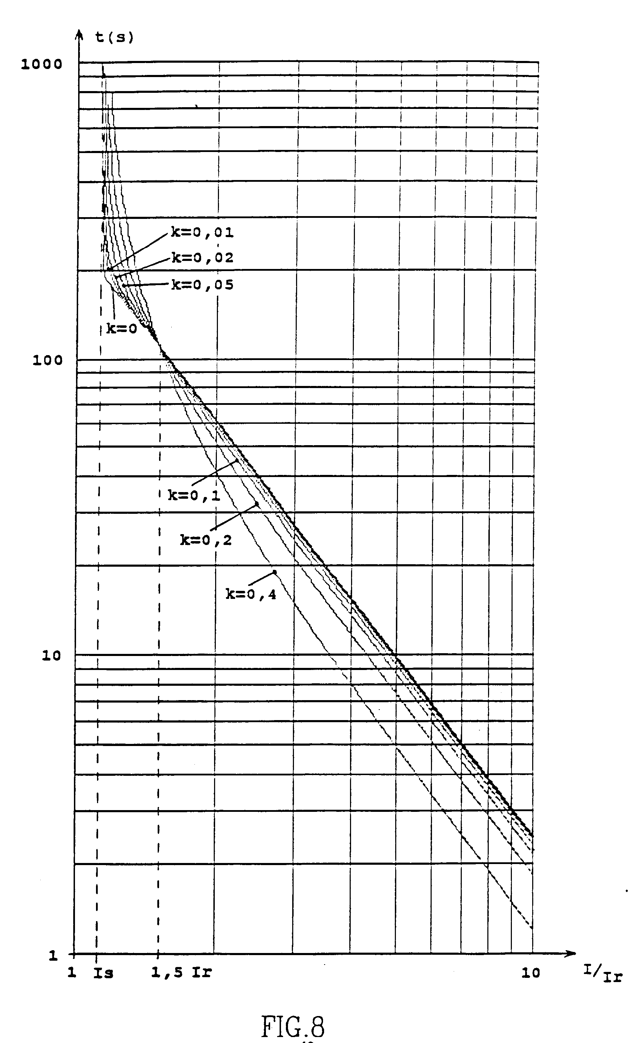

La figure 8 illustre diverses courbes de déclenchement d'une fonction long retard selon l'invention.

Une variable k = STRL1/TLR2max est significative de l'inertie introduite dans la fonction long retard par l'intervention de la grandeur TLR1 pour les petites variations de la valeur représentative du courant autour du seuil de courant Is. Lorsque k = 0, la courbe de déclenchement représentée à la figure 8 correspond à la courbe de déclenchement long retard classique représentée en a sur la figure 3. La figure 8 représente les courbes de déclenchement obtenues avec diverses valeurs de k, pour une même valeur de TLR2max. On constate que lorsque STLR1 est égal à 1% ou 2% de TLR2max (k = 0,01 ou 0,02), la courbe de déclenchement est très voisine d'une courbe de déclenchement classique sur une grande partie de la courbe, tout en étant bien arrondie à proximité du seuil de déclenchement.

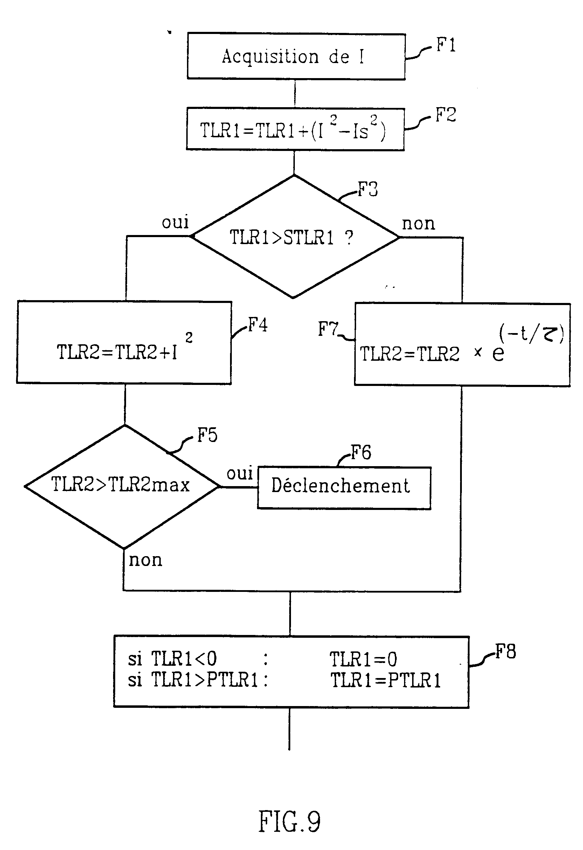

Selon un mode de réalisation préférentiel, l'ensemble électronique de traitement 7 comporte un microprocesseur et la fonction long retard est réalisée conformément à l'organigramme représenté à la figure 9.

Après chaque acquisition d'une valeur I représentative du courant (étape F1), la grandeur TLR1 est recalculée (F2), puis (F3) comparée au seuil STLR1. Si TLR1 est supérieure à STLR1, le carré de la valeur I est ajouté à TLR2 (F4) et la nouvelle valeur TLR2 est comparée à TLR2max (F5). Si TLR2 est supérieure à TLR2max, un ordre de déclenchement est produit (F6). Si (F3) TLR1 est inférieure à STLR1, TLR2 est réduit selon une fonction exponentielle (F7). A la fin du cycle (F8), si TLR1 est inférieure à zéro, TLR1 est remise à zéro, et si TLR1 est supérieure à PTLR1, elle est limitée à cette valeur pour le cycle suivant. Cette limitation de TLR1 à des valeurs haute et basse pourrait éventuellement être réalisée entre les étapes F2 et F3.

Des variations de la valeur représentative du courant autour d'une valeur moyenne, telles que représentées par exemple sur les figures 4 à 6, et dont l'influence sur la fonction long retard est écartée grâce à la présente invention, peuvent avoir de nombreuses causes. Dans le cas des déclencheurs numériques, on peut montrer que l'utilisation d'une valeur I représentative de la valeur efficace du courant, obtenue par échantillonnage du signal de sortie des moyens de détection, élévation au carré et intégration sur une période d'intégration prédéterminée, conduit à obtenir une valeur I de ce type, oscillant périodiquement autour de la valeur efficace réelle du courant dès que la fréquence du courant varie.

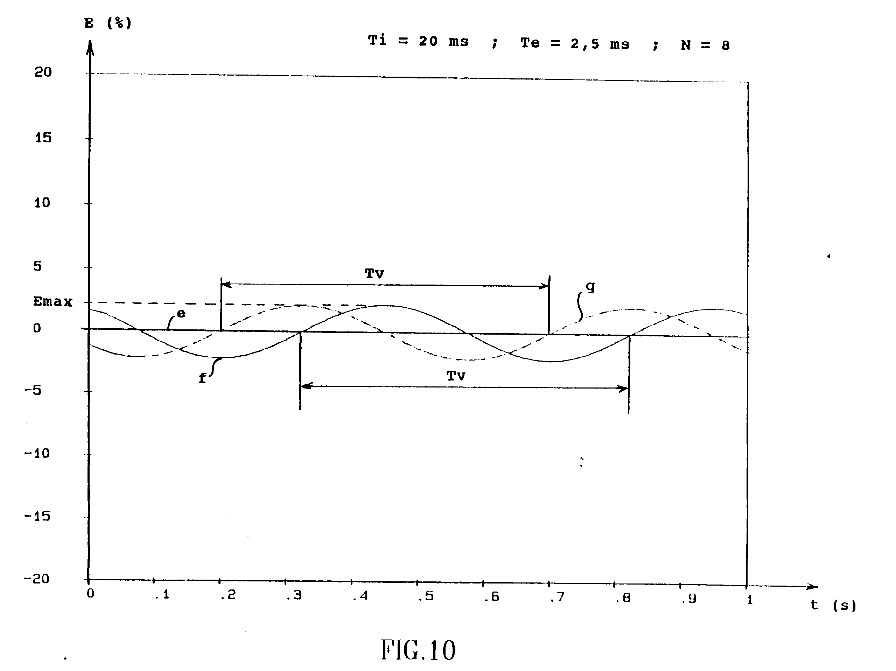

La figure 10 illustre, à titre d'exemple, pour trois fréquences différentes, la variation en fonction du temps de l'écart E, en pourcentage, entre le carré de la valeur efficace calculé et le carré de la valeur efficace réel d'un signal sinusoïdal pur échantillonné avec une période d'échantillonnage Te = 2,5ms et intégré sur une période d'intégration Ti = 20ms, soit sur un nombre N de 8 échantillons. Tandis que pour une fréquence de 50Hz (courbe e) l'écart E est nul, une variation de 1Hz de la fréquence conduit à un écart non négligeable, de valeur moyenne nulle, variant sinusoïdalement avec une période Tv de 0,5s, (courbes f et g).

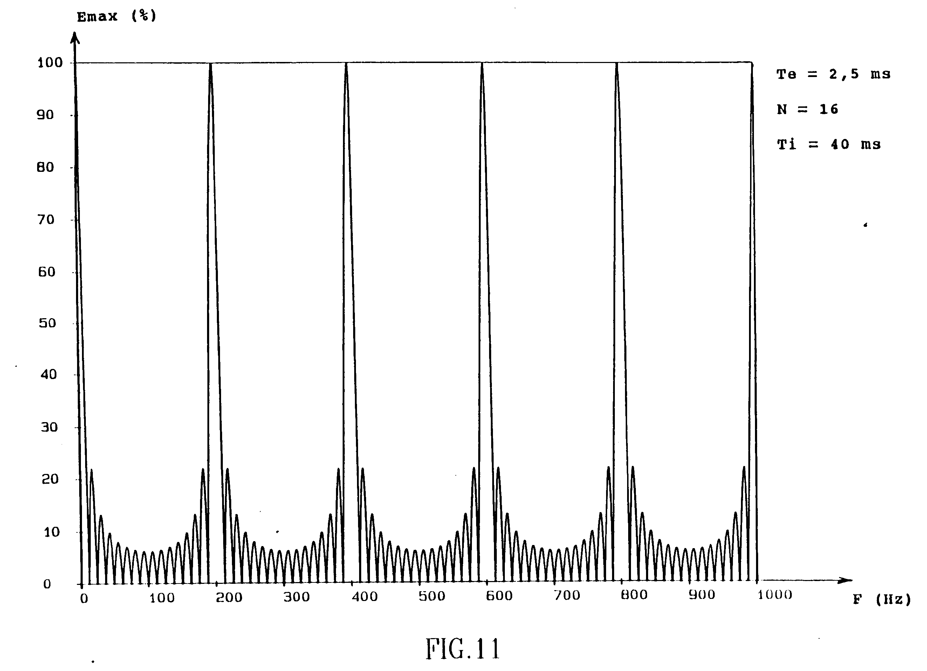

La figure 11 représente, en pourcentage, l'écart maximum Emax, en valeur absolue, correspondant à la valeur crête de l'écart représenté sur la figure 10, obtenu lors du calcul du carré de la valeur efficace d'un signal sinusoïdal de fréquence F, avec une période d'échantillonnage Te = 2,5ms et une période d'intégration Ti = 40ms, soit avec un nombre N de 16 échantillons pour chaque acquisition de la valeur I. Cette courbe présente une suite de lobes, l'écart maximum variant très fortement avec la fréquence en fonction des valeurs relatives de la période d'échantillonnage, de la période d'intégration et de la période du signal. Les lobes principaux, où l'écart maximum atteint 100%, correspondent aux fréquences très faibles (inférieures à 12,5Hz sur la figure 11) lorsque la période d'intégration devient inférieure à la demi-période du signal, ainsi qu'aux signaux dont la période est égale au double de la période d'échantillonnage ou à un multiple de cette valeur (sur la figure, signaux de fréquence 200Hz, 400Hz,...).

En dehors de ces lobes principaux, l'écart maximum est nul lorsque la période d'intégration est un multiple entier de la demi-période du signal et augmente pour former des lobes intermédiaires lorsqu'elle s'écarte de ces valeurs. La période Tv de variation de l'écart E est d'autant plus grande que l'écart maximum Emax est faible et dans tous les cas, la valeur moyenne de l'écart E tend vers zéro.

L'invention décrite ci-dessus, en éliminant l'influence des variations de la valeur représentative du courant autour d'une valeur moyenne, permet de rendre le déclencheur pratiquement insensible aux erreurs de numérisation dues au choix de la période d'intégration vis à vis de la fréquence du réseau et, pour des périodes d'échantillonnage et d'intégration prédéterminées, de le rendre insensible aux variations de fréquence du réseau. La mise en oeuvre de l'invention dans les conditions d'échantillonnage et d'intégration représentées à la figure 11 permet de supprimer tous les lobes intermédiaires.

Pour améliorer l'indépendance de la fonction long retard vis à vis de la fréquence du réseau, notamment pour les fréquences élevées correspondant aux lobes principaux représentés à la figure 11, selon un mode de réalisation préférentiel, le signal est échantillonné par groupes successifs de 4 échantillons avec une période d'échantillonnage Te, les échantillons adjacents de deux groupes successifs étant séparés par Te + Te/4.

Pour améliorer l'indépendance de la mesure vis à vis des harmoniques de la fréquence du réseau, un autre mode de réalisation consiste à échantillonner le signal de sortie des moyens de détection par groupes successifs de n échantillons; les périodes d'échantillonnage de deux groupes successifs étant différentes. A titre d'exemple, un cycle de quatre groupes de 64 échantillons peut, pour une période d'échantillonnage moyenne Te, être réalisé de la façon suivante:

- premier groupe G1 de 64 échantillons : Te1 = 63/64 Te;
- deuxième groupe G2 de 64 échantillons : Te2 = 65/64 Te;
- troisième groupe G3 de 64 échantillons : Te3 = 62/64 Te;
- quatrième groupe G4 de 64 échantillons : Te4 = 66/64 Te.

La suite des groupes se faisant ainsi:
G1, G2, G3, G4, G1, G2 ...

Dans un mode de réalisation préférentiel, à l'intérieur d'un cycle de q groupes (par exemple 4), les valeurs de la période d'échantillonnage (Te1,Te2; Te3,Te4) sont réparties de façon symétrique par rapport à une valeur moyenne (Te) de la période d'échantillonnage.

Les différentes valeurs des périodes d'échantillonnages sont choisies de façon à avoir une couverture maximale du signal dans un temps minimum tout en restant indépendant de la fréquence du réseau.

Le nombre n d'échantillons d'un groupe est indépendant du nombre d'échantillons pris en compte pendant une période d'intégration Ti.

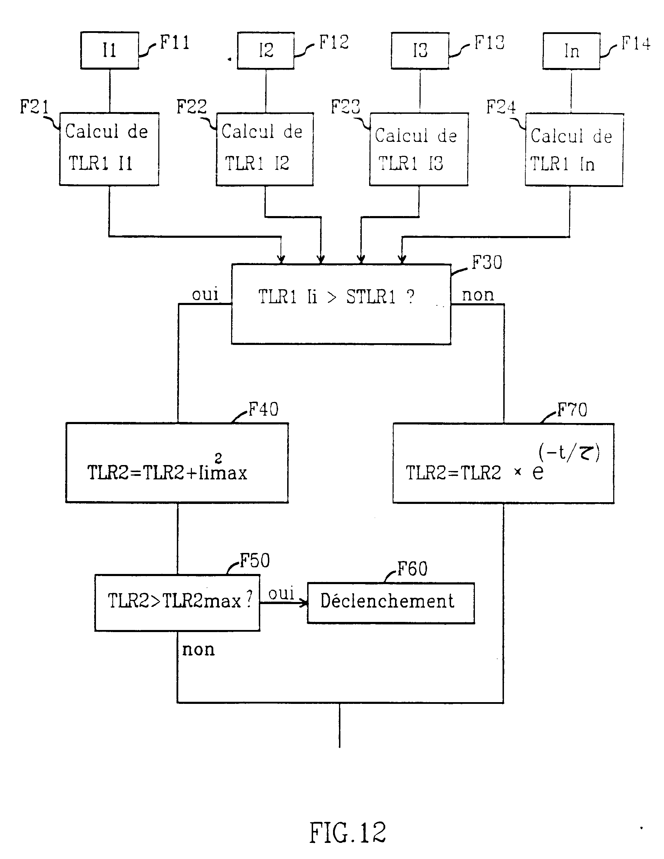

L'invention s'applique non seulement à un déclencheur monophasé, mais également à un déclencheur multipolaire. Il est alors indispensable de séparer le traitement des courants des différentes phases pour l'acquisition de valeurs Ii, par exemple I1,I2,I3, et In pour un déclencheur à 3 phases et neutre, représentatives du courant dans les différentes phases et le calcul de grandeurs TLR1 Ii associées, comme représenté à la figure 12 (étapes F11 à F14 et F21 à F24). Par contre, une grandeur TLR2 unique peut être utilisée. Dans ce cas, les grandeurs TLR1 Ii sont comparées au seuil STLR1 (F30)) et si au moins l'une d'entre elles est supérieure au seuil, TLR2 est augmentée du carré de la valeur maximale Iimax représentative des courants (F40) avant d'être comparée à TLR2max (F50), de manière à produire un signal de déclenchement (F60) si TLR2 est supérieure à TLR2max. Si aucune des grandeurs TLR1 Ii n'est supérieure à STLR1, la grandeur TLR2 est décrémentée exponentiellement (F70).

**Revendications**

1. Déclencheur électronique comportant des moyens (5) de détection du courant parcourant un conducteur (1) destiné à être protégé par un disjoncteur électrique (2) associé au déclencheur, un ensemble électronique de traitement (7) assurant au moins une fonction de déclenchement temporisé de type long retard, l'ensemble, connecté aux moyens de détection, comportant des moyens de production d'une valeur (I) représentative du courant, des moyens de production d'une première grandeur (TLR1), représentative de l'état thermique du disjoncteur, et dont les variations sont proportionnelles à la différence ($I^2$-$Is^2$) entre le carré de la valeur (I) représentative du courant et le carré d'un seuil de courant (Is) prédéterminé, et des moyens de comparaison de la première grandeur (TLR1) à un premier seuil (STLR1) prédéterminé, déclencheur caractérisé en ce que l'ensemble comporte des moyens (F4) d'incrémentation d'une seconde grandeur (TLR2) représentative de l'état thermique du disjoncteur lorsque la première grandeur (TLR1) est supérieure au premier seuil (STLR1), des moyens (F7) de décrémentation de la seconde grandeur (TLR2) lorsque la première grandeur (TLR1) est inférieure au premier seuil (STLR1), et des moyens (F5) de comparaison de la seconde grandeur à un second seuil (TLR2max), prédéterminé, produisant un signal de déclenchement (F6) lorsque la seconde grandeur (TLR2) est supérieure au second seuil (TLR2max).

2. Déclencheur selon la revendication 1, caractérisé en ce que l'incrémentation de la seconde grandeur (TLR2) est proportionnelle au carré de la valeur (I) représentative du courant et sa décrémentation est une fonction exponentielle du temps.

3. Déclencheur selon l'une des revendications 1 et 2, caractérisé en ce que la première grandeur (TLR1) est limitée (F8) à des niveaux haut (PTLR1) et bas (0) prédéterminés.

4. Déclencheur selon l'une quelconque des revendications 1 à 3, caractérisé en ce que la valeur (I) représentative du courant est représentative de la valeur efficace du courant, et obtenue par échantillonnage du signal de sortie des moyens de détection, élévation au carré des échantillons et intégration sur une période d'intégration prédéterminée.

5. Déclencheur selon la revendication 4, caractérisé en ce que le signal de sortie des moyens de détection est échantillonné par groupes successifs de "n" échantillons avec une période d'échantillonnage (Te) prédéterminée, les échantillons adjacents de deux groupes successifs étant séparés par une période légèrement supérieure à la période d'échantillonnage.

6. Déclencheur selon la revendication 5, caractérisé en ce que la période séparant des échantillons adjacents de deux groupes successifs est égale à la période d'échantillonnage augmentée du quart de la période d'échantillonnage.

7. Déclencheur selon la revendication 4, caractérisé en ce que le signal de sortie des moyens de détection est échantillonné par groupes successifs de n échantillons avec des périodes d'échantillonnage (Te1-Te4) prédéterminés, différentes pour deux groupes successifs.

8. Déclencheur selon la revendication 7, caractérisé en ce que les échantillons constituent des cycles de q groupes successifs, avec une succession identique des périodes d'échantillonnage (Te1-Te4) à l'intérieur d'un cycle.

**Patentansprüche**

1. Elektronischer Auslöser mit Mitteln (5) zur Erfassung des Stroms in einem Leiter (1), der durch einen dem Auslöser zugeordneten Leistungsschalter (2) geschützt werden soll, sowie mit einer elektronischen Signalverarbeitungsschaltung (7), die mindestens eine Auslösefunktion mit Langzeitverzögerung gewährleistet, wobei die an die Erfassungsmittel angeschlossene Schaltung Mittel zur Erzeugung eines den Strom abbildenden Werts (I), Mittel zur Erzeugung einer ersten, den thermischen Zustand des Leistungsschalters abbildenden Größe (TLR1), deren Änderungen der Differenz ($I^2 - Is^2$) zwischen dem Quadrat des den Strom abbildenden Werts (I) und dem Quadrat eines festgelegten Stromansprechwerts (Is) proportional sind, sowie Mittel zum Vergleich der ersten Größe (TLR1) mit einem ersten festgelegten Schwellwert (STLR1) umfaßt, dadurch gekennzeichnet, daß die Schaltung Mittel (F4) zur Erhöhung einer zweiten, den thermischen Zustand des Leistungsschalters abbildenden Größe (TLR2), wenn die erste Größe (TLR1) über dem ersten Schwellwert (STLR1) liegt, Mittel (F7) zur Verminderung der zweiten Größe (TLR2), wenn die erste Größe (TLR1) unter dem ersten Schwellwert (STLR1) liegt, sowie Mittel (F5) zum Vergleich der zweiten Größe mit einem festgelegten zweiten Schwellwert (TLR2) umfaßt, die dann ein Auslösesignal (F6) erzeugen, wenn die zweite Größe (TLR2) über dem zweiten Schwellwert (TLR2) liegt.

2. Auslöser nach Anspruch 1, dadurch gekennzeichnet, daß die Erhöhung der zweiten Größe (TLR2) dem Quadrat des den Strom abbildenden Werts (I) proportional und seine Verminderung eine Exponentialfunktion der Zeit ist.

3. Auslöser nach einem der Ansprüche 1 oder 2, dadurch gekennzeichnet, daß die erste Größe (TLR1) auf einen oberen Wert (PTLR1) und einen unteren Wert (0) begrenzt ist (F8).

4. Auslöser nach einem der Ansprüche 1 bis 3, dadurch gekennzeichnet, daß der den Strom abbildende Wert (I) ein Abbild des Effektivwerts des Stroms ist und durch Abtastung des Ausgangssignals der Erfassungsmittel, Bildung des Quadrats der Abtastwerte und Integration über eine festgelegte Integrationszeit gewonnen wird.

5. Auslöser nach Anspruch 4, dadurch gekennzeichnet, daß das Ausgangssignal der Erfassungsmittel in aufeinanderfolgenden Blöcken mit "n" Abtastwerten und einer festgelegten Abtastzeit (Te) abgefragt wird, wobei die benachbarten Abtastwerte zweier aufeinanderfolgender Blöcke durch eine geringfügig über der Abtastzeit liegende Zeitspanne getrennt sind.

6. Auslöser nach Anspruch 5, dadurch gekennzeichnet, daß die Zeitspanne zwischen den benachbarten Abtastwerten zweier aufeinanderfolgender Blöcke der Abtastzeit plus einem Viertel der Abtastzeit entspricht.

7. Auslöser nach Anspruch 4, dadurch gekennzeichnet, daß das Ausgangssignal der Erfassungsmittel in aufeinanderfolgenden Blöcken mit n Abtastwerten und festgelegten Abtastzeiten (Te1 - Te4) abgefragt wird, wobei die Abtastzeiten für zwei aufeinanderfolgende Blöcke unterschiedlich sind.

8. Auslöser nach Anspruch 7, dadurch gekennzeichnet, daß die Abtastungen Zyklen von q aufeinanderfolgenden Blöcken entsprechen, wobei die Abtastzeiten (Te1 - Te4) innerhalb eines Zyklus die gleiche Abfolge aufweisen.

**Claims**

1. An electronic trip device comprising detection means (5) for detecting the current flowing in a conductor (1) designed to be protected by an electrical circuit breaker (2) associated to the trip device, an electronic processing unit (7) performing at least a delayed tripping function of the long delay type, the assembly, connected to the detection means, comprising means for producing a value (I) representative of the current, means for producing a first quantity (TLR1), representative of the thermal state of the circuit breaker, the variations of which are proportional to the difference ($I^2 - Is^2$) between the square of the value (I) representative of the current and the square of a preset current threshold (Is), and means for comparing the first quantity (TLR1) to a preset first threshold (STLR1), a trip device characterized in that the assembly comprises means (F4) for incrementing a second quantity (TLR2) representative of the thermal state of the circuit breaker when the first quantity (TLR1) is greater than the first threshold (STLR1), means (F7) for decrementing the second quantity (TLR2) when the first quantity (TLR1) is lower than the first threshold (STLR1), and means (F5) for comparing the second quantity to a second, preset threshold (TLR2max), producing a tripping signal (F6) when the second quantity (TLR2) is greater than the second threshold (TLR2max).

2. The trip device according to claim 1, characterized in that incrementation of the second quantity (TLR2) is proportional to the square of the value (I) representative of the current and its decrementation is an exponential function of time.

3. The trip device according to claim 1, characterized in that the first quantity (TLR1) is limited (F8) to preset high (PTLR1) and low (0) levels.

4. The trip device according to claim 1, characterized in that the value (I) representative of the current is representative of the rms value of the current, and is obtained by sampling of the output signal from the detection means, squaring of the samples and integration over a preset integration period.

5. The trip device according to claim 4, characterized in that the output signal from the detection means is sampled in successive groups of "n" samples with a preset sampling period (Te), the adjacent samples of two successive groups being separated by a period slightly greater than the sampling period.

6. The trip device according to claim 5, characterized in that the period separating adjacent samples of two successive groups is equal to the sampling period increased by a quarter of the sampling period.

7. The trip device according to claim 4, characterized in that the output signal from the detection means is sampled in successive groups of n samples with predetermined sampling periods (Te1-Te4), different for two successive groups.

8. The trip device according to claim 7, characterized in that the samples constitute cycles of q successive groups, with an identical succession of the sampling periods (Te1-Te4) within a cycle.

FIG.1 (Art antérieur)

FIG.2 (Art antérieur)

FIG.3

FIG.4 (Art antérieur)

10

FIG.5

FIG.6

FIG.7

FIG.8

```
        ┌──────────────────────────┐
        │     Acquisition de I     │─── F1
        └──────────────────────────┘
                     │
        ┌──────────────────────────┐
        │  TLR1=TLR1+(I² − Is²)    │─── F2
        └──────────────────────────┘
                     │
```

$$TLR1 = TLR1 + (I^2 - Is^2)$$

F3

oui    TLR1 > STLR1 ?    non

F4
$$TLR2 = TLR2 + I^2$$

F7
$$TLR2 = TLR2 \times e^{(-t/\tau)}$$

F5
   TLR2 > TLR2max    oui

F6
Déclenchement

non

F8
si TLR1 < 0    :      TLR1 = 0
si TLR1 > PTLR1 :      TLR1 = PTLR1

FIG.9

FIG.10

FIG.11

EP 0 465 384 B1

FIG.12